# EUROPEAN PATENT APPLICATION

(11) **EP 4 768 882 A1**
(43) Date of publication of application: **01.07.2026**
(21) Application number: 24856547.5
(22) Date of filing: 23.08.2024
(51) Int. Cl.: G01M 3/20, G01M 3/32

(54) **LEAKAGE INSPECTION METHOD AND LEAKAGE INSPECTION DEVICE FOR RESIN SHEET SEALED PRODUCT**

(30) Priority: 23.08.2023 JP 2023135271
(71) Applicant: Marunaka Co., Ltd., Toyoake-shi, Aichi 470-1141 (JP); Yutaka Electronics Industry Co., Ltd., Kariya-shi, Aichi-ken 448-8533 (JP)
(72) Inventor: NAKAGAWA Mitsugu, Toyoake-shi, Aichi 470-1141 (JP); ENOMOTO Kazumi, Toyoake-shi, Aichi 470-1141 (JP); SUENAMI Kensuke, Kariya-shi, Aichi 448-8533 (JP); YAMANAKA Atsushi, Toyota-shi, Aichi 471-8571 (JP); OBAYASHI Yoshiro, Toyota-shi, Aichi 471-8571 (JP)
(74) Representative: Becker, Eberhard
(86) International application number: PCT/JP2024/030084
(87) International publication number: WO 2025/041859

(57) **Abstract**

Provided are a leakage inspection device and a leakage inspection method capable of performing quantitative leakage evaluation/airtightness assurance using an inspection gas on a resin sheet sealed article in which a contained article is tightly sealed in a vacuum state by a resin sheet. A contained article 3 is packaged by two upper and lower resin sheets 4, 4 in which a recessed part 4r is formed in a central part, and a flat part 14a of a needle connection jig 14 is sandwiched by projecting parts 4f2, 4f2 of the resin sheets 4, 4. In a first-stage resin sheet welding process, a projection-shaped welding seal part comprising a first welding seal part 4a in which "inner peripheral surfaces are welded to each other" and a second welding seal part 4b in which "the inner peripheral surface of the resin sheets 4, 4 and the outer peripheral surface of the flat part 14a are welded" is formed on the outer periphery of the resin sheets 4, 4. In a second-stage resin sheet welding process, a resin sheet opening 4a1 sandwiched between two recessed corner parts b2, b2 of the first welding seal part 4a is welded and sealed to form a linear third welding seal part 4c.

## Description

### Technical Field

The present invention relates to a leak inspection method and a leak inspection apparatus for resin sheet sealed products, and more specifically, relates to a leak inspection method and a leak inspection apparatus for resin sheet sealed products capable of using a tracer gas to perform quantitative leak evaluation and airtightness assurance for a resin sheet sealed product in which an internal product is hermetically sealed in a vacuum state by resin sheets.

### Background Art

From the viewpoint of preventing deterioration of foods, pharmaceuticals, mechanical parts, and electrical parts, these foods, pharmaceuticals, and parts are placed in a resin sheet bag and hermetically sealed (such products are hereinafter referred to as "internal products"). There are two types of means for hermetically sealing the internal product with the resin sheet bag: a case where the resin sheet bag is sealed by introducing an inert gas such as nitrogen gas or carbon dioxide gas at atmospheric pressure or higher (hereinafter referred to as "positive pressure hermetic sealing"), and a case where the resin sheet bag is sealed by evacuating the interior of the bag to a vacuum lower than atmospheric pressure (hereinafter referred to as "negative pressure hermetic sealing").

Leak inspection of positive pressure hermetic sealing is carried out by detecting the inert gas leaking from the interior of the resin sheet bag to the outside (see, for example, Patent Documents 1, 2, and 3).

On the other hand, leak inspection of negative pressure hermetic sealing is carried out by placing a resin sheet sealed product, in which the resin sheets and the internal product are in close contact with each other due to the inside being evacuated to a vacuum lower than atmospheric pressure, in a pressure vessel and holding the product in a pressurized atmosphere of helium gas for a certain period of time, thereafter placing the product in a vacuum vessel and holding the product under vacuum for a certain period of time, and after returning the vessel to atmospheric pressure, confirming, visually or by touch, deformation due to a pinhole or the like formed in the resin sheets of the resin sheet sealed product (see, for example, Patent Document 4).

### Citation List

### Patent Documents

Patent Document 1: JP 63-33440U1
Patent Document 2: JP 2023-8779A
Patent Document 3: JP 10-185752A
Patent Document 4: JP 2004-93208A

### Summary of Invention

### Problems to be Solved by Invention

The visual inspection or inspection by touch described in Patent Document 4 is carried out because it is difficult to apply conventional leak inspection methods, such as the immersion method in helium leak testing (JIS Z 2331:2006) or the sealed object chamber method in pressure change leak testing (JIS Z 2332:2012), to leak inspection of a resin sheet sealed product with a vacuum inside.

The immersion method in helium leak testing (JIS Z 2331:2006) performs leak inspection by immersing a test object in a sealed vessel filled with helium gas for a certain period of time to allow helium gas to enter the test object, placing the test object into which helium gas has entered in a vacuum vessel, and detecting the helium gas using the vacuum vessel method in helium leak testing.

When this immersion method in helium leak testing is applied to a resin sheet sealed product with a vacuum inside, even if a pinhole is formed in the resin sheets when the resin sheet sealed product is immersed in a vessel filled with helium gas, it may be difficult for the helium gas to enter the gap between the resin sheets and the internal product, which are in close contact. In addition, a certain amount of helium gas dissolves in the resin sheets during immersion in helium gas, and helium gas may be detected during the subsequent helium leak testing even though there is no leak. From the above, it can be seen that the immersion method in helium leak testing is not very suitable as a leak inspection means for a resin sheet sealed product with a vacuum inside.

Note that in the immersion method in helium leak testing, helium leak inspection is carried out by placing a test object immersed in helium in a vacuum vessel and evacuating the vessel; however, if the leak hole is large and a large amount of leakage occurs, the entered helium gas is evacuated, and leak detection may become impossible. That is, the immersion method is unsuitable for leak inspection of gross leaks and has the disadvantage of being limited to leak inspection of minute leaks.

The sealed object chamber method in pressure change leak testing (JIS Z 2332:2012) measures the amount of leakage by placing a test object in a vessel and sealing the vessel, pressurizing the interior of the vessel with gas, and determining the amount of leakage from the pressure change inside the vessel after holding it in the pressurized state for a certain period of time. That is, if there is a leak hole in a sealed test object with a vacuum inside, the gas in the pressurized vessel enters the test object, causing the pressure in the vessel to decrease. The leak is detected from this pressure change in the vessel.

When applying the sealed object chamber method in pressure change leak testing to a resin sheet sealed product in which the resin sheets and the internal product are in close contact with each other with a vacuum inside, since the gap space between the resin sheets and the internal product is very small and the amount of gas entering due to gas pressurization is very small even if there is a leak in the resin sheets, the pressure change in the vessel for leak detection is small, making leak detection difficult. That is, it can be seen that the sealed object chamber method in pressure change leak testing is not very suitable as a leak inspection means for a resin sheet sealed product.

Incidentally, when the internal product is heat-sealed with resin sheets, it is practically impossible to accurately detect the internal pressure of the resin sheet sealed product. This is because a pressure detection probe cannot be inserted into the resin sheet sealed product after heat-sealing.

Similarly, it is also practically impossible to accurately detect the internal pressure of the resin sheet sealed product immediately before heat-sealing the internal product with the resin sheets. This is because, since the portion to be heat-sealed is pressed from above and below by a heat sealer, the pressure detection probe cannot be brought close to the portion to be heat-sealed immediately before heat-sealing.

In other words, when hermetically sealing the internal product with the resin sheets in a vacuum state, it is impossible to detect the internal pressure of the resin sheet sealed product at the time of heat-sealing the resin sheets, and by extension, to control the internal pressure of the resin sheet sealed product at the time of heat-sealing.

Therefore, when applying the vacuum vessel method of "detecting a tracer gas leaking from a test object into a vacuum vessel while pressurizing the interior of the test object placed within the vacuum vessel maintained at a predetermined degree of vacuum with the tracer gas" as a leak inspection method for a resin sheet sealed product, there is a problem that the pressure difference between the inside and the outside of the resin sheet sealed product is unknown, making it impossible to set a threshold [Pa·m³/s] of a helium leak rate in the leak inspection. Thus, with respect to a resin sheet sealed product with a vacuum inside, it is considered that no leak inspection method exists that is capable of performing quantitative leak evaluation and airtightness assurance (e.g., less than 10⁻⁷ Pa·m³/s) using helium gas.

Accordingly, the present invention has been made in view of the problems of the conventional art described above, and an object thereof is to provide a leak inspection method and a leak inspection apparatus for resin sheet sealed products, capable of performing quantitative leak evaluation and airtightness assurance using a tracer gas for a resin sheet sealed product in which an internal product is hermetically sealed with resin sheets in a vacuum state.

### Means for Solving the Problems

A resin sheet sealed product leak inspection method according to the present invention for achieving the above object is a resin sheet sealed product leak inspection method in which a resin sheet sealed product (10) having an internal product (3) hermetically sealed therein in a vacuum state by heat-sealing a pair of upper and lower resin sheets (4, 4) is placed within a vacuum vessel (1) maintained at a predetermined degree of vacuum, and a leak inspection is carried out using a tracer gas, the leak inspection method including: sandwiching a pipe connection jig (14) configured for evacuation or tracer gas introduction between portions of the resin sheets (4, 4) when covering the internal product (3) with the resin sheets (4, 4); forming heat-sealed portions (4a, 4b) "so as to form a protruding portion (b2-b1-b1-b2) containing the internal product (3) inside and partially protruding outward"; introducing the tracer gas into a gap space (5) formed between the resin sheets (4, 4) and the internal product (3) and the protruding portion (b2-b1-b1-b2) from a narrow resin sheet opening (4a1) formed in the protruding portion (b2-b1-b1-b2), and carrying out a first leak inspection to detect the tracer gas leaking from the heat-sealed portions (4a, 4b) into the external vacuum vessel (1); thereafter evacuating the gap space (5) to a pressure "at which a sufficient amount of tracer gas remains below atmospheric pressure to enable detection of a leak rate"; and subsequently forming a heat-sealed portion (4c) hermetically sealing the resin sheet opening (4a1), and carrying out a second leak inspection to detect the tracer gas leaking from the heat-sealed portion (4c) to a downstream side of the pipe connection jig (14).

With the above configuration, the heat-sealed portions (4a, 4b) have a protruding portion (b2-b1-b1-b2), and as a whole form a projecting shape. Therefore, the heat-sealed portions (4a, 4b) have two recessed corner portions (b2, b2), and a narrow opening (resin sheet opening (4a1)) is formed between the recessed corner portions (b2, b2). Since the resin sheet opening (4a1) is also an opening of the protruding portion (b2-b1-b1-b2), the gap space (5) having the internal product (3) is formed on one side with respect to the resin sheet opening (4a1), and a pipe introduction space (6) having the pipe connection jig (14) is formed on the opposite side.

Therefore, when airtightness is ensured in the heat-sealed portions (4a, 4b) and the interiors (14ca, 14cb) of the pipe connection jig (14), the pressure in the gap space (5) and the pressure in the pipe introduction space (6) can be regarded as equal to each other. As a result, it is possible to control and measure the pressure in the gap space (5) directly or indirectly via the pressure in the pipe introduction space (6).

Furthermore, since the pipe connection jig (14) is disposed in the protruding portion (b2-b1-b1-b2) having a projecting shape, the pipe connection jig (14) does not interfere with the heat-sealing when the resin sheet opening (4a1) is heat-sealed. As a result, it is possible to perform pressure control and pressure measurement for the gap space (5) until immediately before the heat-sealing of the resin sheet opening (4a1).

A second feature of the resin sheet sealed product leak inspection method according to the present invention is that the first leak inspection is continued until completion of the second leak inspection, thereby detecting the tracer gas leaking into the external vacuum vessel (1) from "the heat-sealed portion (4c) related to the resin sheet opening (4a1)" in addition to from the heat-sealed portions (4a, 4b).

With the above configuration, it is possible to confirm that the sealed state of the heat-sealed portions (4a, 4b) sealed earlier is normally maintained during the execution of the second leak inspection, and it becomes possible to check the leak rate of the tracer gas from "the heat-sealed portion (4c) related to the resin sheet opening (4a1)" into the vacuum vessel (1).

A third feature of the resin sheet sealed product leak inspection method according to the present invention is that the resin sheets (4, 4) are heat-sealed such that the protruding portion (b2-b1-b1-b2) traverses the pipe connection jig (14), and a portion (14a) of the pipe connection jig (14) sandwiched between the resin sheets (4, 4) is formed into a flat portion (14a).

With the above configuration, since the portion of the pipe connection jig (14) sandwiched between the resin sheets (4, 4) is the flat portion (14a), it becomes significantly easy to ensure airtightness at the heat-sealed portion (4b) between the inner peripheral surfaces of the resin sheets (4, 4) and the outer peripheral surface of the pipe connection jig (14).

A fourth feature of the resin sheet sealed product leak inspection method according to the present invention is that the pipe connection jig (14) allows a pipe (15a) to move forward and backward therein while maintaining airtightness.

With the above configuration, by advancing the pipe (15a) close to the gap space (5), it becomes significantly easy to perform pressure control for the gap space (5), such as evacuation or tracer gas introduction. On the other hand, by retracting the pipe (15a) away from the gap space (5), it becomes possible to avoid interference between the pipe (15a) and the heat-sealing apparatuses (2-2) in the heat-sealing process.

A fifth feature of the resin sheet sealed product leak inspection method according to the present invention is that the resin sheets (4) respectively have recessed portions (4r) into which the internal product (3) fits formed in central portions thereof, and flange portions (4f, 4f) of the recessed portions (4r) are formed into a projecting shape in which rectangular frame portions (4f1) and protruding portions (4f2) are combined.

With the above configuration, it becomes significantly easy to set up the resin sheets (4, 4), the internal product (3), and the pipe connection jig (14) into the vacuum vessel (1).

A sixth feature of the resin sheet sealed product leak inspection method according to the present invention is that when the gap space (5) is evacuated to a predetermined pressure and the resin sheet opening (4a1) is to be heat-sealed, heat-sealing is carried out after the gap space (5) has pressure variation smaller than pressure variation at the start of the evacuation.

With the above configuration, it is possible to regard changes over time in the pressure in the gap space (5) during heat-sealing and the changes over time in the pressure on the downstream side (second vacuum gauge (17)) as being almost the same. As a result, it becomes possible to estimate the pressure in the gap space (5) with high accuracy at the time of heat-sealing, and it also becomes possible to set a highly reliable threshold for the leak rate of the tracer gas.

A seventh feature of the resin sheet sealed product leak inspection method according to the present invention is that when the second leak inspection is to be carried out, the flow rate of the tracer gas introduced into a tracer gas detector (18) configured to measure the leak rate of the tracer gas is set to be smaller than the flow rate of the tracer gas introduced into a vacuum pump (16) configured to evacuate "the heat-sealed portion (4c) related to the resin sheet opening (4a1)".

With the above configuration, the amount of tracer gas remaining in the pipe introduced into the tracer gas detector (18) is reduced, and therefore the reliability of the leak rate of the tracer gas to be measured is maintained.

An eighth feature of the resin sheet sealed product leak inspection method according to the present invention is that after the leak rate of the tracer gas leaking from "the heat-sealed portion (4c) related to the resin sheet opening (4a1)" to the downstream side of the pipe connection jig (14) is measured, an evacuation system and a leak rate measurement system are purged with an inert gas other than the tracer gas.

With the above configuration, the remaining tracer gas is forced to be purged in the vacuum evacuation system and the leak rate measurement system, and therefore the reliability of the leak rate of the tracer gas to be measured is significantly improved.

A resin sheet sealed product leak inspection apparatus according to the present invention for achieving the above object includes: a vacuum vessel (1) configured to accommodate, under a predetermined vacuum environment, an internal product (3) covered by resin sheets (4, 4) and a pipe connection jig (14) sandwiched between portions of the resin sheets (4, 4); a first vacuum pump (11) configured to evacuate an internal space of the vacuum vessel (1) formed around the internal product (3); a pair of first heat-sealing apparatuses (2-1) configured to heat-seal overlapping portions (4f, 4f) of the resin sheets (4, 4) along an outer periphery thereof in a projecting shape to form projecting heat-sealed portions (4a, 4b); a second vacuum pump (16) configured to evacuate a gap space (5) formed between the resin sheets (4, 4) and the internal product (3); a tracer gas source (19) configured to introduce a tracer gas into the gap space (5); a first pipe (15) that communicates with the gap space (5), the second vacuum pump (16), and the tracer gas source (19); a first tracer gas detector (13) configured to detect a leak rate of the tracer gas leaking from the projecting heat-sealed portions (4a, 4b) into the external vacuum vessel (1); a pair of second heat-sealing apparatuses (2-2) configured to heat-seal a narrow resin sheet opening (4a1) between two recessed corner portions (b2, b2) of the projecting heat-sealed portions (4a, 4b) to form a linear heat-sealed portion (4c); and a second tracer gas detector (18) configured to detect the leak rate of the tracer gas leaking from the linear heat-sealed portion (4c) toward the first pipe (15).

With the above configuration, the feature and the second feature of the "resin sheet sealed product leak inspection method" described above can be suitably implemented.

A second feature of the resin sheet sealed product leak inspection apparatus according to the present invention is that the pipe connection jig (14) includes a molded component having through portions (14aa, 14ba) that pass therethrough, in which "a flat portion (14a) and a cylindrical portion (14b) are integrally molded from a resin compatible with the resin sheets (4, 4)", and the flat portion (14a) is sandwiched between portions (4f2, 4f2) of the overlapping portions (4f, 4f) of the resin sheets (4, 4) that project outward from the resin sheet opening (4a1).

With the above configuration, the third feature of the "resin sheet sealed product leak inspection method" described above can be suitably implemented.

A third feature of the resin sheet sealed product leak inspection apparatus according to the present invention is that a pipe (15a) connected to the first pipe (15) via a flexible movable pipe (15b) is disposed in the though portions (14aa, 14ba) so as to be movable back and forth.

With the above configuration, the fourth feature of the "resin sheet sealed product leak inspection method" described above can be suitably implemented.

A fourth feature of the resin sheet sealed product leak inspection apparatus according to the present invention is that a through-hole (14aa) through which the pipe (15a) is movable back and forth is formed in the flat portion (14a).

With the above configuration, the fourth feature of the "resin sheet sealed product leak inspection method" described above can be suitably implemented.

A fifth feature of the resin sheet sealed product leak inspection apparatus according to the present invention is that the pipe connection jig (14) separately includes a metal female cylindrical portion (14c) including a large-diameter portion (14ca) into which the cylindrical portion (14b) fits and a small-diameter portion (14cb) through which the pipe (15a) passes, and sealing members (14cc, 14cd) configured to maintain airtightness are provided between the cylindrical portion (14b) and the large-diameter portion (14ca) and between the pipe (15a) and the small-diameter portion (14cb), respectively.

With the above configuration, the fourth feature of the "resin sheet sealed product leak inspection method" described above can be suitably implemented.

A sixth feature of the resin sheet sealed product leak inspection apparatus according to the present invention is that flange portions (4f) of the resin sheets (4) have a projecting shape in which rectangular frame portions (4f1) and protruding portions (4f2) are combined, and recessed portions (4r) into which the internal product (3) fits are formed inside the flange portions (4f).

With the above configuration, the fifth feature of the "resin sheet sealed product leak inspection method" described above can be suitably implemented.

A seventh feature of the resin sheet sealed product leak inspection apparatus according to the present invention is that, in parallel with a second pipe (16a) coupling the first pipe (15) and the second vacuum pump (16), one or more small-conductance components (41) having a smaller conductance value than the second pipe (16a) are connected.

With the above configuration, the sixth feature of the "resin sheet sealed product leak inspection method" described above can be suitably implemented.

An eighth feature of the resin sheet sealed product leak inspection apparatus according to the present invention is that, in parallel with a third pipe (18a) coupling the first pipe (15) and the second tracer gas detector (18), one or more small-conductance components (42, 43) having a smaller conductance value than the third pipe (18a) are connected.

With the above configuration, the seventh feature of the "resin sheet sealed product leak inspection method" described above can be suitably implemented.

A ninth feature of the resin sheet sealed product leak inspection apparatus according to the present invention is that an inert gas other than the tracer gas is suppliable to the second vacuum pump (16) and the second tracer gas detector (18) in parallel.

With the above configuration, the eighth feature of the "resin sheet sealed product leak inspection method" described above can be suitably implemented.

### Advantageous Effects of Invention

With the leak inspection method and the resin sheet sealed product leak inspection apparatus according to the present invention, it becomes possible to perform quantitative leak evaluation and airtightness assurance using a tracer gas for a resin sheet sealed product (10) in which an internal product (3) is hermetically sealed with resin sheets (4, 4) in a vacuum state.

### Brief Description of Drawings

FIG. 1 is an explanatory view showing a configuration of main parts of a resin sheet sealed product leak inspection apparatus according to a first embodiment of the present invention.
FIG. 2 is an explanatory view showing the placement of a resin sheet sealed product in a vacuum vessel and heat-sealed portions of resin sheets.
FIG. 3 is an explanatory view showing the cutting of a resin sheet and the separation of a needle connection jig related to the resin sheet sealed product.
FIG. 4 is an explanatory view showing a configuration of the needle connection jig according to the present invention.
FIG. 5 is a process diagram showing a leak inspection process carried out by the resin sheet sealed product leak inspection apparatus according to the first embodiment of the present invention.
FIG. 6 is an explanatory view showing a resin sheet heat-sealing process before a first leak inspection.
FIG. 7 is an explanatory view showing a resin sheet heat-sealing process before a second leak inspection.
FIG. 8 is a graph showing measurement results of changes over time in pressure before and after heat-sealing of a resin sheet opening and a leak rate of helium leaking from a third heat-sealed portion according to the first embodiment of the present invention.
FIG. 9 is an explanatory view showing a configuration of main parts of a resin sheet sealed product leak inspection apparatus according to a second embodiment of the present invention.
FIG. 10 is a graph showing measurement results of changes over time in pressure before and after heat-sealing of a resin sheet opening and a leak rate of helium leaking from a third heat-sealed portion according to the second embodiment of the present invention.
FIG. 11 is an explanatory view showing a configuration of main parts of a resin sheet sealed product leak inspection apparatus according to a third embodiment of the present invention.
FIG. 12 is a graph showing measurement results of changes over time in pressure before and after heat-sealing of a resin sheet opening and a leak rate of helium leaking from a third heat-sealed portion according to the third embodiment of the present invention.
FIG. 13 is an explanatory view showing a configuration of main parts of a pipe connection jig of a resin sheet sealed product leak inspection apparatus according to a fourth embodiment of the present invention.
FIG. 14 is a graph showing measurement results of changes over time in pressure before and after heat-sealing of a resin sheet opening and a leak rate of helium leaking from a third heat-sealed portion according to the fourth embodiment of the present invention.
FIG. 15 is an explanatory view showing a configuration of main parts of a pipe connection jig of a resin sheet sealed product leak inspection apparatus according to the fourth embodiment of the present invention.

### Description of Embodiments

Hereinafter, the present invention will be described with reference to the accompanying drawings.

### First Embodiment

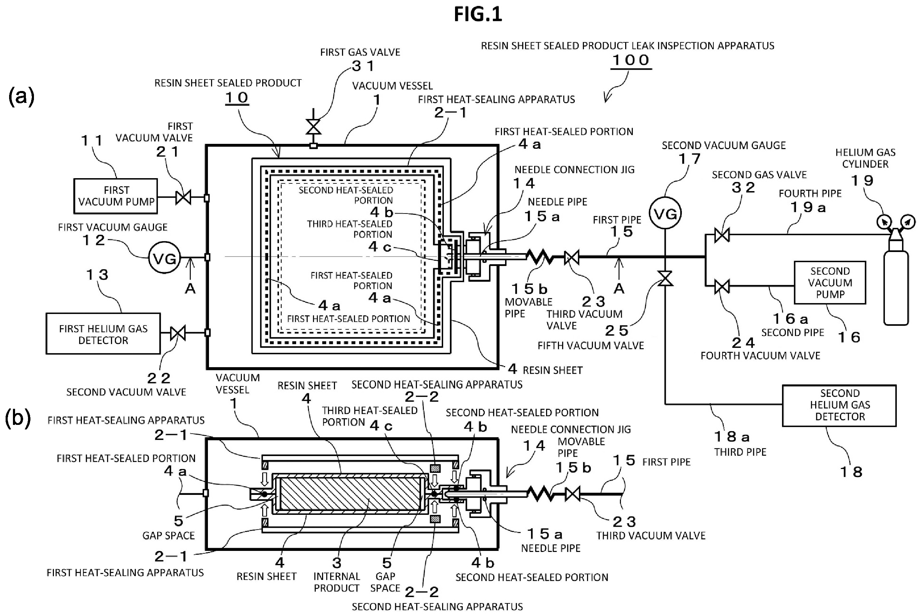

FIG. 1 is an explanatory view showing a configuration of main parts of a resin sheet sealed product leak inspection apparatus 100 according to a first embodiment of the present invention. Note that a needle connection jig 14 is shown in cross section. FIG. 1(a) is a plan view of the resin sheet sealed product leak inspection apparatus 100. FIG. 1(b) is a cross-sectional view taken along a line A-A in FIG. 1(a).

This resin sheet sealed product leak inspection apparatus 100 is configured to be able to heat-seal an internal product 3 with upper and lower resin sheets 4, 4 while measuring the pressure in a gap space 5 formed between the resin sheets 4, 4 and the internal product 3 and controlling the pressure to a predetermined value. This configuration allows the resin sheet sealed product leak inspection apparatus 100 to perform quantitative leak evaluation and airtightness assurance for the resin sheet sealed product 10 using helium gas. Here, "quantitative leak evaluation" means setting a threshold (for example, 10⁻⁷ [Pa·m³/s] or less) of the leak rate of helium leaking from the heat-sealed portions based on the pressure difference between the interior of the gap space 5 and the outside (within a vacuum vessel 1). In addition, "airtightness assurance" means measuring a leak rate of helium leaking from the heat-sealed portions and determining the quality of the heat-sealed portions based on a preset threshold.

As will be described in detail later, a resin sheet heat-sealing process for heat-sealing the internal product 3 with upper and lower resin sheets 4, 4 is carried out in two stages, and correspondingly to the resin sheet heat-sealing process, a leak inspection for the heat-sealed portions is carried out in two stages: a "first leak inspection" and a "second leak inspection". Incidentally, FIG. 1 shows the resin sheet sealed product leak inspection apparatus 100 at the time of the second leak inspection. Hereinafter, the configuration of the resin sheet sealed product leak inspection apparatus 100 will be described.

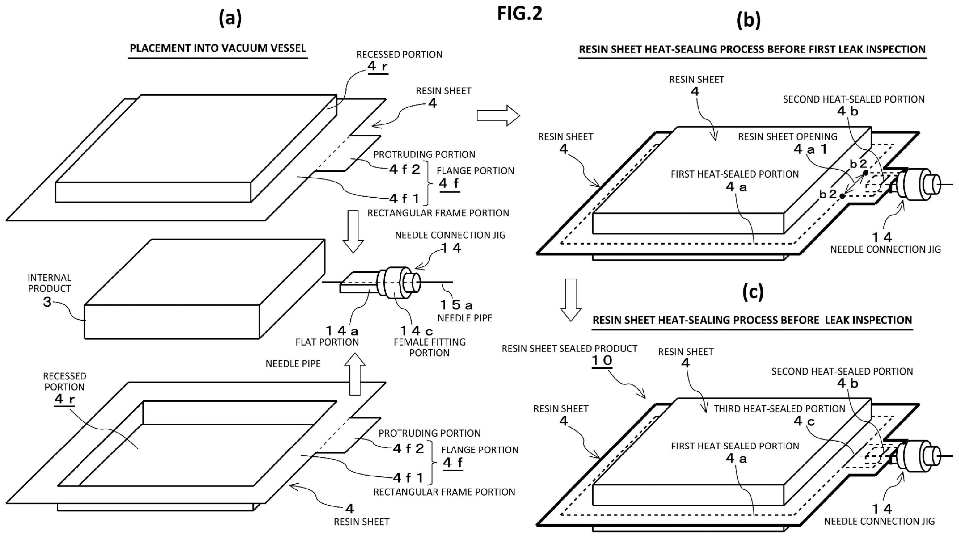

This resin sheet sealed product leak inspection apparatus 100 includes: a vacuum vessel 1 configured to maintain a vacuum inside; a pair of upper and lower resin sheets 4, 4 that package an internal product 3; first heat-sealing apparatuses 2-1 that heat-seal outer peripheries of the pair of upper and lower resin sheets 4, 4; second heat-sealing apparatuses 2-2 that heat-seal a resin sheet opening 4a1 (FIG. 2(b)) of the pair of upper and lower resin sheets 4, 4; a first vacuum pump 11 that evacuates the interior of the vacuum vessel 1 to a predetermined pressure; a first vacuum gauge 12 that measures a degree of vacuum inside the vacuum vessel 1; a first helium gas detector 13 that detects helium gas leaking from a first heat-sealed portion 4a, second heat-sealed portions 4b, etc.; a needle connection jig 14 configured to connect a needle pipe 15a that evacuates or introduces helium gas into a gap space 5; a first pipe 15 including a movable pipe 15b that is flexible and is directly connected to the needle pipe 15a; a second vacuum pump 16 that evacuates the gap space 5 via the needle pipe 15a; a second pipe 16a that couples the first pipe 15 and the second vacuum pump 16; a second vacuum gauge 17 that measures a degree of vacuum in the gap space 5; a second helium gas detector 18 that detects helium gas leaking from a third heat-sealed portion 4c, etc.; a third pipe 18a that couples the first pipe 15 and the second helium gas detector 18; a helium gas cylinder 19 that supplies helium gas to the gap space 5; a fourth pipe 19a that couples the first pipe 15 and the helium gas cylinder 19; a first vacuum valve 21 that shuts off communication between the vacuum vessel 1 and the first vacuum pump 11; a second vacuum valve 22 that shuts off communication between the vacuum vessel 1 and the first helium gas detector 13; a third vacuum valve 23 that shuts off communication between the gap space 5 and the first pipe 15; a fourth vacuum valve 24 that shuts off communication between the first pipe 15 and the second vacuum pump 16; a first gas valve 31 configured to open the vacuum vessel 1 to the atmosphere; and a second gas valve 32 that shuts off communication between the first pipe 15 and the helium gas cylinder 19. Hereinafter, each component will be further described.

The first heat-sealing apparatuses 2-1 have, for example, a projecting frame structure and form projecting heat-sealed portions. The projecting heat-sealed portions include the first heat-sealed portion 4a, where the inner peripheral surfaces of the pair of upper and lower resin sheets 4, 4 are heat-sealed together, and the second heat-sealed portions 4b, where the inner peripheral surfaces of the pair of upper and lower resin sheets 4, 4 are heat-sealed to the outer peripheral surface of the needle connection jig 14. Further, the first heat-sealing apparatuses 2-1 are arranged above and below the internal product 3 and are configured to be movable in a vertical direction using an elevating apparatus (not shown). A heater (not shown) is built into the frame.

Similarly, the second heat-sealing apparatuses 2-2 have, for example, a linear frame structure and form a linear heat-sealed portion. The linear heat-sealed portion is the third heat-sealed portion 4c, where the inner peripheral surfaces of the resin sheets 4, 4 located at the resin sheet opening 4a1 (FIG. 2(b)) are heat-sealed together. Further, the second heat-sealing apparatuses 2-2 are arranged above and below the internal product 3, and are configured to be movable in the vertical direction using an elevating apparatus (not shown). A heater (not shown) is built into the frame.

As shown in FIG. 2(a), each resin sheet 4 has a recessed portion 4r in a central portion thereof, modeled after half of the outer shape of the internal product 3. Further, the periphery of the recessed portion 4r constitutes a flange portion 4f. A major part of the flange portion 4f constitutes a rectangular frame portion 4f1, while a portion for sandwiching the needle connection jig 14 constitutes a protruding portion 4f2. For the resin sheets 4, for example, a resin film having a laminated structure of an easily heat-sealable resin film and a metal film, or a resin film having a laminated structure of an easily heat-sealable resin film and a low gas permeability film can be used.

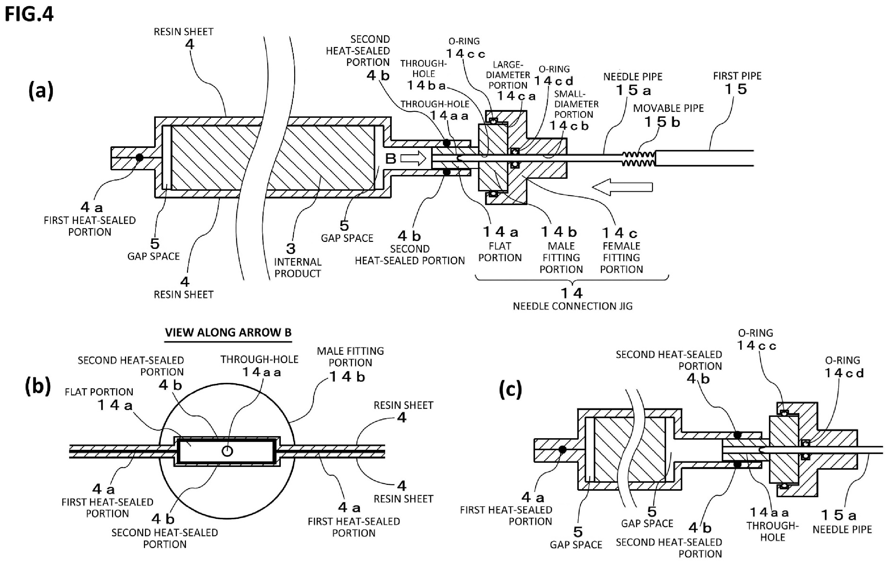

As shown in FIG. 2(b), the first heat-sealing apparatuses 2-1 heat-seal the outer peripheries of the pair of upper and lower resin sheets 4, 4 (the rectangular frame portions 4f1, 4f1 and the protruding portions 4f2, 4f2 in FIG. 2(a)) together from above and below, thereby hermetically sealing the internal product 3 with the pair of upper and lower resin sheets 4, 4. Therefore, the airtightness of the gap space 5 formed between the resin sheets 4, 4 and the internal product 3 is ensured by the first heat-sealed portion 4a (the portion indicated by the dotted line), the second heat-sealed portions 4b (the portions indicated by the solid line), and the needle connection jig 14. The sealing means (helium leakage prevention means) of the needle connection jig 14 will be described later with reference to FIG. 4.

Incidentally, in the aforementioned "first leak inspection", helium gas leaking from the first heat-sealed portion 4a, the second heat-sealed portions 4b, and the needle connection jig 14 into the external vacuum container 1 is detected by the first helium gas detector 13.

As shown in FIG. 2(c), the second heat-sealing apparatuses 2-2 heat-seal the resin sheet opening 4a1 from above and below, thereby hermetically sealing the internal product 3 with the pair of upper and lower resin sheets 4, 4. Therefore, the airtightness of the resin sheet sealed product 10 in its final form is ensured by the first heat-sealed portion 4a (the portion indicated by the dotted line) and the third heat-sealed portion 4c.

Incidentally, in the aforementioned "second leak inspection", helium gas leaking from the third heat-sealed portion 4c toward the first pipe 15 is detected by the second helium gas detector 18. Note that the detection of helium gas leaking from the first heat-sealed portion 4a into the external vacuum vessel 1, which constitutes the "first leak inspection", is carried out by the first helium gas detector 13. Note that even during the execution of the "second leak inspection", the "first leak inspection" is continued, and helium gas leaking from the first heat-sealed portion 4a and the newly heat-sealed third heat-sealed portion 4c into the external vacuum vessel 1 is detected by the first helium gas detector 13.

The gap space 5 is a minute space formed between the pair of upper and lower resin sheets 4, 4 and the internal product 3, and helium gas is introduced from the helium gas cylinder 19 via the needle pipe 15a during the first leak inspection. Further, in the second leak inspection, evacuation is carried out by the second vacuum pump 16 via the needle pipe 15a so that helium gas at a pressure of 100 Pa or more, out of the helium gas introduced during the first leak inspection, remains in the gap space 5.

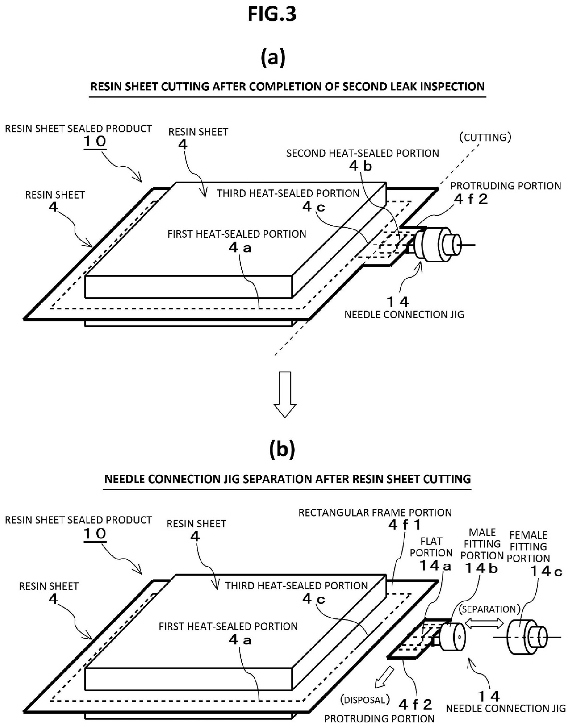

Further, as shown in FIG. 3(a), of the flange portions 4f, 4f of the pair of upper and lower resin sheets 4, 4, the protruding portions 4f2, 4f2 are cut off after the second leak inspection, while the rectangular frame portions 4f1, 4f1 remain.

Further, as shown in FIG. 3(b), a flat portion 14a and a male fitting portion 14b sandwiched by the cut protruding portions 4f2, 4f2 cannot be reused because the second heat-sealed portions 4b, 4b are formed, and are separated from a female fitting portion 14c and discarded together with the protruding portions 4f2, 4f2. The female fitting portion 14c of the needle connection jig 14 remains fixed to the vacuum vessel 1 and is to be reused.

Returning to FIG. 1(b), the needle connection jig 14 is configured such that the needle pipe 15a can freely move back and forth inside. A flow path is formed inside the needle pipe 15a, which communicates with the gap space 5 and with the first pipe 15 via the movable pipe 15b. Note that the movable pipe 15b is a flexible pipe having, for example, a bellows structure or the like. Accordingly, it is possible to bring the needle pipe 15a close to the resin sheet opening 4a1 of the gap space 5, which allows for both pressure control and pressure measurement for the gap space 5 via the needle pipe 15a. Details of the needle connection jig 14 will be described later with reference to FIG. 4.

The first vacuum pump 11 is a vacuum pump for evacuating the vacuum vessel 1, and a combined pump system can be used which includes, for example, a roots-type vacuum pump (not shown) and an oil-sealed rotary vacuum pump (not shown) connected at the subsequent stage of the roots-type vacuum pump.

Returning to FIG. 1(a), the first vacuum gauge 12 is a vacuum gauge for measuring the degree of vacuum in the vacuum vessel 1, and for example, a Pirani vacuum gauge can be used.

The first helium gas detector 13 is used in the first leak inspection. The "first leak inspection" is a leak inspection for detecting helium gas leaking from the first heat-sealed portion 4a and the second heat-sealed portions 4b, and further from the needle connection jig 14 into the external vacuum vessel 1. This first leak inspection is continued until the second leak inspection is completed.

The first pipe 15 is a pipe for pressure control and pressure measurement for the gap space 5. Therefore, the first pipe 15 communicates with the second vacuum pump 16 of an evacuation system, the second vacuum gauge 17 of a pressure measurement system, the second helium gas detector 18 of a leak rate measurement system, and the helium gas cylinder 19 of a helium gas introduction system.

The second vacuum pump 16 is a vacuum pump for evacuating the gap space 5, and for example, a positive displacement vacuum pump operating at low vacuum, such as an oil-sealed rotary pump, can be used.

The second helium gas detector 18 is used in the second leak inspection. The "second leak inspection" is a leak inspection for detecting helium gas leaking from the third heat-sealed portion 4c, where the resin sheet opening 4a1 (FIG. 2(b)) has been heat-sealed, toward the first pipe 15.

The second vacuum gauge 17 is a vacuum gauge for measuring the degree of vacuum in the gap space 5, and similarly to the first vacuum gauge 12, a Pirani vacuum gauge can be used.

FIG. 4 is an explanatory view showing a configuration of the needle connection jig 14 according to the present invention. FIG. 4(a) shows the state of the needle connection jig 14 after the heat-sealing process, which is the first stage. FIG. 4(b) is a view taken in the direction of the arrow B shown in FIG. 4(a). FIG. 4(c) shows the helium leakage prevention means for the gap space 5.

The needle connection jig 14 includes the flat portion 14a, which is sandwiched between the pair of upper and lower resin sheets 4, 4, the male fitting portion 14b, which is integrally molded with the flat portion 14a, and the female fitting portion 14c, into which the male fitting portion 14b is press-fitted.

The flat portion 14a is made of a high-hardness resin identical to or compatible with the resin sheets 4, and has, for example, a rectangular and flat shape. A through-hole 14aa extends through the flat portion 14a, through which the needle pipe 15a can advance and retreat without load. Note that the flat portion 14a is not limited to the use of the above-mentioned high-hardness resin, and may be made of a resin having elasticity.

The male fitting portion 14b is integrally molded with the flat portion 14a and has a cylindrical shape. A through-hole 14ba is formed in the male fitting portion 14b, through which the needle pipe 15a passes.

The female fitting portion 14c is made of metal, and the interior thereof has a two-stage cylindrical structure including a large-diameter portion 14ca and a small-diameter portion 14cb. The male fitting portion 14b is press-fitted into the large-diameter portion 14ca. The needle pipe 15a is inserted through the small-diameter portion 14cb.

An O-ring 14cc is provided in the large-diameter portion 14ca, and airtightness between the outer peripheral surface of the male fitting portion 14b and the large-diameter portion 14ca of the female fitting portion 14c is ensured. Similarly, an O-ring 14cd is also provided in the small-diameter portion 14cb, and airtightness between the outer peripheral surface of the needle pipe 15a and the small-diameter portion 14cb of the female fitting portion 14c is ensured. Accordingly, as shown in FIG. 4(c), the airtightness of the gap space 5 is ensured by the first heat-sealed portion 4a and the second heat-sealed portions 4b, as well as the O-rings 14cc and 14cd.

Further, the female fitting portion 14c is fixed to the vacuum vessel 1 and is designed to be reused. Hereinafter, a leak inspection process carried out by the resin sheet sealed product leak inspection apparatus 100 will be described.

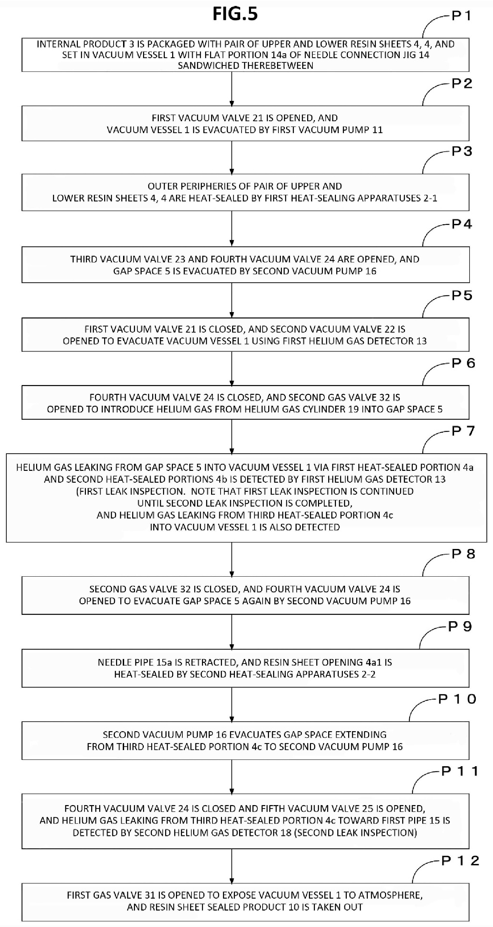

FIG. 5 is an explanatory view showing the leak inspection process carried out by the resin sheet sealed product leak inspection apparatus 100 according to the first embodiment of the present invention.

In a process P1, the internal product 3 is packaged with the pair of upper and lower resin sheets 4, 4, and set in the vacuum vessel 1 with the flat portion 14a of the needle connection jig 14 sandwiched therebetween. As shown in FIG. 2(a), the flat portion 14a of the needle connection jig 14 is sandwiched between the protruding portions 4f2, 4f2 of the pair of upper and lower resin sheets 4, 4. Further, the pair of upper and lower resin sheets 4, 4 are temporarily fixed by the first heat-sealing apparatuses 2-1 so as not to move.

In a process P2, the first vacuum valve 21 is opened, and the vacuum vessel 1 is evacuated by the first vacuum pump 11. The ultimate pressure in the vacuum vessel 1 is, for example, less than 100 Pa.

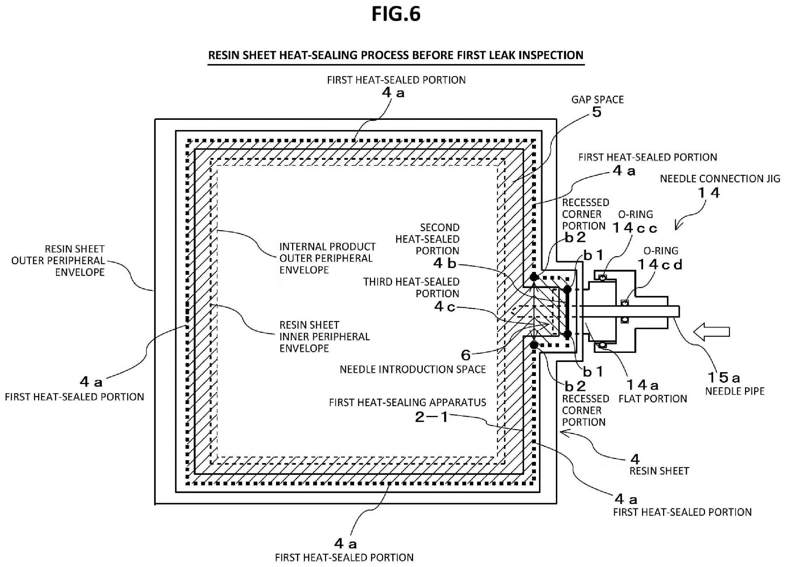

In a process P3, the outer peripheries of the pair of upper and lower resin sheets 4, 4 are heat-sealed by the first heat-sealing apparatuses 2-1. As shown in FIG. 6, the areas heat-sealed by the first heat-sealing apparatuses 2-1 include the first heat-sealed portion 4a where the inner peripheral surfaces of the resin sheets 4 are heat-sealed together, and the second heat-sealed portions 4b (section b1-b1) where "the inner peripheral surfaces of the resin sheets 4" are heat-sealed to "the outer peripheral surface of the flat portion 14a of the needle connection jig 14". These second heat-sealed portions 4b are respectively formed at two locations, upper and lower. In a heat-sealing process, which is a process P3, the internal product 3 is hermetically sealed by the pair of upper and lower resin sheets 4, 4 and the needle connection jig 14.

Note that, in the region where the inner peripheral surfaces of the pair of upper and lower resin sheets 4, 4 meet, the portion corresponding to the section b2-b2 remains as a non-heat-sealed portion (the resin sheet opening 4a1) that is not heat-sealed by the first heat-sealing apparatuses 2-1. This resin sheet opening 4a1 is to be heat-sealed by the second heat-sealing apparatuses 2-2 before the second leak inspection.

In a process P4, the third vacuum valve 23 and the fourth vacuum valve 24 are opened, and the gap space 5 (upward-sloping hatched portion in FIG. 6) and a needle introduction space 6 (downward-sloping hatched portion, rectangular b1-b2-b2-b1 portion) are evacuated by the second vacuum pump 16. The degree of vacuum in the gap space 5 is measured by the second vacuum gauge 17.

In a process P5, the first vacuum valve 21 is closed, and the second vacuum valve 22 is opened to evacuate the vacuum vessel 1 using the first helium gas detector 13 and perform a measurement to confirm the absence of leakage.

In a process P6, the fourth vacuum valve 24 is closed, and the second gas valve 32 is opened to introduce helium gas from the helium gas cylinder 19 into the gap space 5.

In a process P7, helium gas leaking from the gap space 5 into the vacuum vessel 1 via the first heat-sealed portion 4a and the second heat-sealed portions 4b and helium gas leaking into the vacuum vessel 1 via the needle connection jig 14 are detected by the first helium gas detector 13 (first leak inspection). Note that this first leak inspection is continued until the second leak inspection described later is completed.

In a process P8, the second gas valve 32 is closed, and the fourth vacuum valve 24 is opened to evacuate the gap space 5 again by the second vacuum pump 16. The ultimate pressure in the gap space 5 is a vacuum pressure at which a sufficient amount of helium gas remains to perform the second leak inspection, for example, 100 Pa or more.

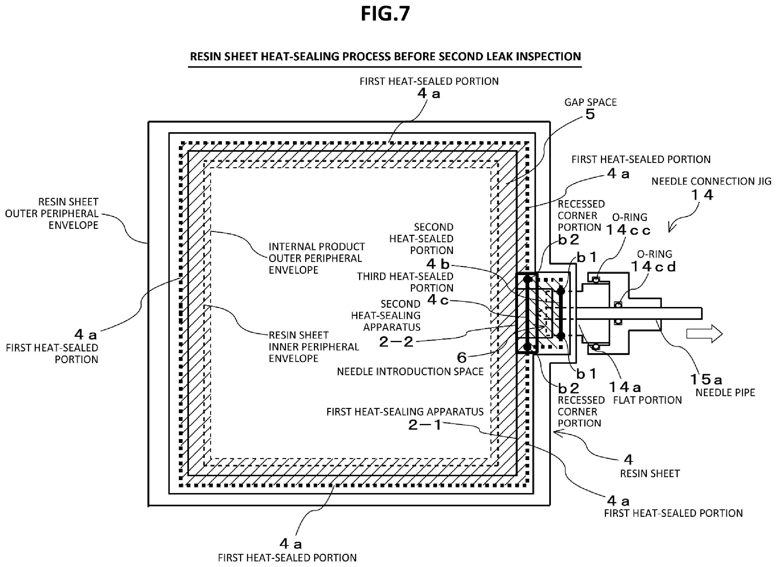

In a process P9, the needle pipe 15a is retracted, and the resin sheet opening 4a1 is heat-sealed by the second heat-sealing apparatuses 2-2. As shown in FIG. 7, the resin sheet opening 4a1 represented as the section b2-b2 is heat-sealed, and the third heat-sealed portion 4c is formed. As a result, the gap space 5 is hermetically sealed by the first heat-sealed portion 4a excluding a section b2-b1-b1-b2 and the third heat-sealed portion 4c constituted by the section b2-b2, with helium gas remaining inside in an amount sufficient to perform the second leak inspection.

In a process P10, the second vacuum pump 16 evacuates the interior of the piping extending from the third heat-sealed portion 4c to the second vacuum pump 16 (the interiors of the needle introduction space 6, the needle pipe 15a, the first pipe 15, and the second pipe 16a). The ultimate pressure in the interior of the piping is, for example, less than 10 Pa.

In a process P11, the fourth vacuum valve 24 is closed and a fifth vacuum valve 25 is opened, and helium gas leaking from the third heat-sealed portion 4c into the piping is detected by the second helium gas detector 18 (second leak inspection). Note that the first leak inspection is continuously carried out even during the second leak inspection. That is, of the heat-sealed portions where the inner peripheral surfaces of the pair of upper and lower resin sheets 4, 4 are heat-sealed together, the absence of leakage from the third heat-sealed portion 4c into the interior of the piping is assured by the second helium gas detector 18, and the absence of leakage from the first heat-sealed portion 4a, the second heat-sealed portions 4b, and the third heat-sealed portion 4c into the external vacuum vessel 1 is assured by the first helium gas detector 13.

After completion of the first leak inspection and the second leak inspection, the first gas valve 31 is opened to expose the vacuum vessel 1 to the atmosphere, bringing the pair of upper and lower resin sheets 4, 4 into close contact with the internal product 3. Thereafter, as shown in FIG. 3(a), the protruding portions 4f2 of the resin sheets 4, 4 are cut, and the resin sheet sealed product 10 is taken out.

The leak inspection performance of the resin sheet sealed product leak inspection apparatus 100 according to the first embodiment of the present invention was evaluated as follows.

A relatively large electrical product was prepared as the internal product 3. The internal product 3 had a rectangular parallelepiped shape with dimensions of 1000 mm × 750 mm × 30 mm, and since it was an electrical product, long-term weather resistance of several years or more was required, and isolation from the atmosphere was demanded. Therefore, the resin sheets 4 need to prevent permeation of the atmosphere for a long period of several years or more, and are made of a material with low gas permeability for atmospheric component gases. Therefore, the threshold (determination value) of the leak rate for the leak inspection of the resin sheets 4 and the internal product 3 is a relatively low leak rate of 1 × 10⁻⁷ Pa·m³/s for helium gas at a pressure equal to the atmospheric pressure of 1 × 10⁵ Pa.

In the process P1, the internal product 3 and the pair of upper and lower resin sheets 4, 4 were successfully placed in the vacuum vessel 1 without any problem in the form shown in FIG. 2(a). Similarly, in the process P2, the vacuum vessel 1 was successfully evacuated to the desired pressure (less than 100 Pa) by the first vacuum pump 11. Here, the pressure in the vacuum vessel 1 was set to less than 100 Pa in the process P2 in order to detect a low leak rate of 10⁻⁷ Pa·m³/s and in order to set the internal pressure of the bag of the resin sheets 4, 4 (gap space 5) for the second leak inspection to 100 Pa or more.

Further, in the process P3, the heat-sealed portion (first heat-sealed portion 4a) between the inner peripheral surfaces of the pair of upper and lower resin sheets 4, 4 and the heat-sealed portion (second heat-sealed portions 4b) between the inner peripheral surfaces of the pair of upper and lower resin sheets 4, 4 and the outer peripheral surface of the needle connection jig 14 (flat portion 14a) were successfully formed without any problem.

Also, the evacuation of the gap space 5 in the process P4, the introduction of helium gas into the gap space 5 in the process P6, and the detection (first leak inspection) of helium gas leaking from the first heat-sealed portion 4a and the second heat-sealed portions 4b into the external vacuum vessel 1 were successfully carried out without any problem.

This first leak inspection was continuously carried out until the completion of the second leak inspection, and leakage of helium gas leaking from the first heat-sealed portion 4a, the second heat-sealed portions 4b, and the third heat-sealed portion 4c into the external vacuum vessel 1 was detected.

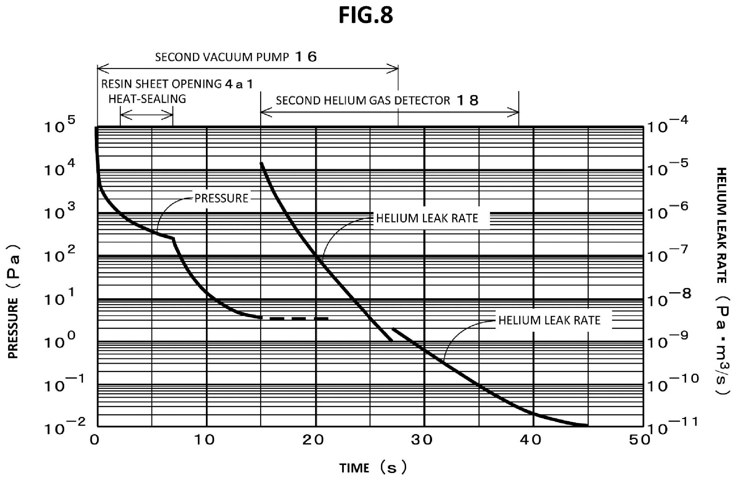

FIG. 8 shows the results of changes over time regarding the heat-sealing of the resin sheet opening 4al and the leak inspection thereof corresponding to the processes P8 to P11, that is, the pressure in the gap space 5 and the leak rate [Pa·m³/s] of helium leaking from the third heat-sealed portion 4c toward the first pipe 15. The pressure in the gap space 5 was measured by the second vacuum gauge 17 via the needle pipe 15a, the first pipe 15, and the third pipe 18a. The helium leak rate [Pa·m³/s] is detected by the second helium gas detector 18 via the needle pipe 15a and the first pipe 15. Note that FIG. 8 shows the result when there was no leak from the third heat-sealed portion 4c.

Hereinafter, the leak inspection (second leak inspection) of helium gas leaking from the third heat-sealed portion 4c formed by heat-sealing the resin sheet opening 4a1 toward the first pipe 15 (interiors of the needle introduction space 6, the needle pipe 15a, the movable pipe 15b, and the first pipe 15) will be described.

As shown in FIG. 8, heat-sealing of the resin sheet opening 4a1 was started two seconds after the pressure at the second vacuum gauge 17 reached 1000 Pa from the start of evacuation by the second vacuum pump 16. The heat-sealing was completed seven seconds later. The pressure at the second vacuum gauge 17 at this time was 240 Pa. Here, assuming that the internal pressure of the bag of the resin sheets 4 (the gap space 5) is 240 Pa, the threshold of the leak rate was estimated to be 1.0 × 10⁻¹⁰ Pa·m³/s.

Thereafter, evacuation by the second vacuum pump 16 was continued, and 15 seconds after the start, the fifth vacuum valve 25 was opened to start the measurement of the helium leak rate by the helium gas detector 18. Note that evacuation was continued by the second vacuum pump 16 and the second helium gas detector 18 until 27 seconds after the start. During this period, the helium leak rate decreased from 10⁻⁵ Pa·m³/s to 10⁻⁹ Pa·m³/s.

Subsequently, 27 seconds after the start of the second leak inspection, the fourth vacuum valve 24 was closed to switch to evacuation by only the second helium gas detector 18, and the detection of the helium leak rate was continued. The helium leak rate reached 1 × 10⁻¹⁰ Pa·m³/s after 34 seconds, and 1 × 10⁻¹¹ Pa·m³/s after approximately 45 seconds. Although the threshold of the leak rate is 1.0 × 10⁻¹⁰ Pa·m³/s, it can be seen that the second leak inspection can be completed after approximately 45 seconds by waiting until 10⁻¹¹ Pa·m³/s is stably indicated, even including the time required for the heat-sealing of the resin sheet opening 4a1. Note that, since the first leak inspection took approximately 30 seconds, the leak inspection time by the resin sheet sealed product leak inspection apparatus 100 according to the first embodiment was approximately 75 seconds (= 30 seconds + 45 seconds).

As described above, the second leak inspection was successfully carried out without any problem.

However, the second leak inspection according to the first embodiment has the following two problems. One problem is that, although the heat-sealing of the resin sheet opening 4a1 is completed 7 seconds after the start of evacuation, a situation may occur where the pressure drop (pressure variation) during the heat-sealing becomes large. In this case, the pressure difference between "the pressure in the gap space 5" and "the pressure at the second vacuum gauge 17" also becomes large. Since "the pressure in the gap space 5 during heat-sealing" cannot be measured directly, "changes over time in the pressure in the gap space 5" is regarded as being substantially equal to "changes over time in the pressure at the second vacuum gauge 17", and the threshold of the helium leak rate is set based on "the pressure at the second vacuum gauge 17 during heat-sealing". Therefore, a large pressure drop at the second vacuum gauge 17 during heat-sealing may, in the worst case, result in a lack of validity of the set threshold of the helium leak rate, thereby compromising the reliability of the leak inspection.

The other problem is the influence of residual helium in the needle connection jig 14, the first pipe 15, and the second helium gas detector 18. This is because, in the second leak inspection, the second helium gas detector 18 detected helium gas at a leak rate of 10⁻⁴ Pa·m³/s to 10⁻⁹ Pa·m³/s between 15 seconds and 28 seconds after the start of evacuation, but helium may remain in the needle connection jig 14, the first pipe 15, and the second helium gas detector 18 at this time, making it difficult to carry out repeated inspections. Hereinafter, a resin sheet sealed product leak inspection apparatus 200 that solves the above two problems will be described.

### Second Embodiment

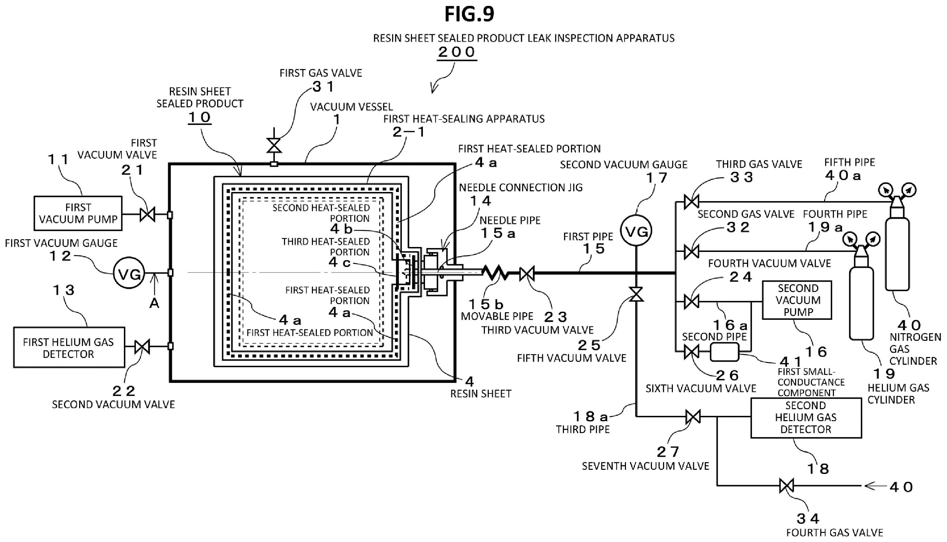

FIG. 9 is an explanatory view showing a configuration of main parts of the resin sheet sealed product leak inspection apparatus 200 according to a second embodiment of the present invention.

In this resin sheet sealed product leak inspection apparatus 200, in order to solve the problems of the second leak inspection described above, the following improvements are made to the resin sheet sealed product leak inspection apparatus 100 according to the first embodiment.

First, in order to reduce the pressure variation (pressure drop) during the heat-sealing of the resin sheet opening 4a1 after the evacuation, that is, to reduce the pressure gradient during heat-sealing, an evacuation flow path in which a sixth vacuum valve 26 and a first small-conductance component 41 are connected in series is separately connected to the second vacuum pump 16 in parallel with the evacuation flow path (second pipe 16a) extending from the fourth vacuum valve 24 to the second vacuum pump 16, so that the pressure drop due to evacuation becomes gradual.

Here, the conductance value [m³/s] of the first small-conductance component 41 is set to a small value such that an effective pumping speed S'_{eff} [m³/s] at the inlet of the needle pipe 15a when the first small-conductance component 41 is provided is smaller than an effective pumping speed S_{eff} [m³/s] when the first small-conductance component 41 is not provided. By setting the conductance value [m³/s] of the first small-conductance component 41 to a small value in this manner, the time constant τ (= V/S'_{eff}) of evacuation during heat-sealing increases, thereby making the pressure drop during heat-sealing gradual. As a result, it becomes possible to regard the pressure at the second vacuum gauge 17 during heat-sealing as being substantially the same as the sealed pressure in the gap space 5 during heat-sealing.

Next, in order to reduce residual helium gas in the leak inspection apparatus, which makes repeated execution of inspections difficult, a nitrogen gas cylinder 40 is connected to the first pipe 15 via a third gas valve 33 and to the helium gas detector 18 via a fourth gas valve 34. This makes it possible to purge most of the helium gas remaining in the evacuation system with nitrogen gas after the resin sheet sealed product 10 is removed from the vacuum vessel 1.

Using the resin sheet sealed product leak inspection apparatus 200 incorporating the above improvements, the same leak inspection process as in the first embodiment was carried out. Here, in the evacuation during the heat-sealing process from 2 seconds to 7 seconds after the start of evacuation, in order to achieve a gradual pressure drop, the fourth vacuum valve 24 was closed and the sixth vacuum valve 26 was opened, and evacuation was carried out via the first small-conductance component 41.

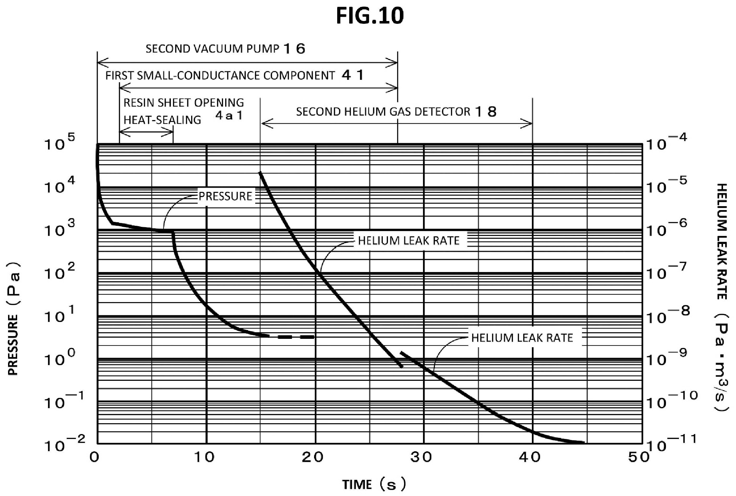

FIG. 10 is a graph showing the results of changes over time in the pressure before and after heat-sealing of the resin sheet opening 4a1 and the leak rate of helium leaking from the third heat-sealed portion 4c toward the first pipe 15 in the second leak inspection.

From 2 seconds to 7 seconds after the start of evacuation, the pressure at the second vacuum gauge 17 decreased gradually: 1300 Pa at 2 seconds after the start, 1000 Pa at 5 seconds after the start, and 850 Pa at 7 seconds after the start. The average value of the pressure from 5 seconds to 7 seconds after the start was 930 Pa. This was taken as the pressure at the second vacuum gauge 17 immediately before heat-sealing.

On the other hand, based on the effective pumping speed at the inlet position of the needle pipe 15a and the effective pumping speed at the position of the second vacuum gauge 17, the pressure at the opening heat-sealed portion (third heat-sealed portion 4c) of the resin sheets 4 immediately before heat-sealing was calculated to be 1100 Pa. As a result, it became possible to set the leak threshold for the second leak inspection to a substantially constant value without varying significantly for each inspection. This is considered to make it possible to improve the quality control of the resin sheet sealed product 10 by clarifying the sealing pressure of the resin sheets 4.

The changes over time in the pressure at the second vacuum gauge 17 and the leak rate at the second helium gas detector 18 from 7 seconds after the start of evacuation in FIG. 10 were similar to the results obtained by the resin sheet sealed product leak inspection apparatus 100 according to the first embodiment. This is because, after heat-sealing from 7 seconds after the start, the small volume to be evacuated and the high pumping speed allow evacuation to several hundred Pa to be performed in less than 1 second.

Although the leak inspection by the second helium gas detector 18 (second leak inspection) starts from 15 seconds, the helium leak rate from 28 seconds after the start of evacuation by only the second helium gas detector 18 reached 1 × 10⁻⁹ Pa·m³/s after 29 seconds and 1 × 10⁻¹⁰ Pa·m³/s after 34 seconds. Here, in the leak inspection according to the second embodiment, since the pressure at the resin sheet opening 4a1 immediately before heat-sealing was determined to be 1100 Pa, it was possible to estimate the leak threshold for the second leak inspection to be 5.6 × 10⁻¹⁰ Pa·m³/s. The time required to reach 5.6 × 10⁻¹⁰ Pa·m³/s was 30 seconds. From this, it can be said that the inspection according to the second embodiment is more reliable and can shorten the time compared to the first embodiment in which the threshold of the leak rate cannot be determined.

Next, in order to reduce residual helium gas in the leak inspection apparatus, which makes repeated execution of inspections difficult, after the completion of the inspection, the third vacuum valve 23, the fourth vacuum valve 24, the sixth vacuum valve 26, and the seventh vacuum valve 27 were closed, and the third gas valve 33 was opened to allow nitrogen gas to flow from the nitrogen gas cylinder 40 to expose the first pipe 15 to atmospheric pressure with nitrogen gas. Thereafter, the third gas valve 33 was closed and the fourth vacuum valve 24 was opened to evacuate the nitrogen gas by the second vacuum pump 16, and simultaneously, the fourth gas valve 34 was opened to operate the second helium gas detector 18 while allowing a minute amount of nitrogen gas to flow from the nitrogen gas cylinder 40. Note that the time required from the completion of the inspection until the introduction of helium gas for the first leak inspection, including the replacement of the resin sheet sealed product 10, the evacuation of the vacuum vessel 1 in the first stage, and the heat-sealing process of the pair of upper and lower resin sheets 4, 4 in the first stage (first heat-sealed portion 4a and second heat-sealed portions 4b), was approximately 20 seconds, and therefore it was possible to carry out the residual helium reduction process for the first pipe 15 twice.

When the residual helium reduction process was carried out twice for each inspection, and the start time of the helium leak rate detection by the second helium gas detector 18 in the second leak inspection was changed from 15 seconds, at which a helium leak rate of 10⁻⁵ Pa·m³/s is detected, to 20 seconds, at which 1 × 10⁻⁷ Pa·m³/s is detected, and the leak inspection was repeatedly carried out, it was possible to carry out the leak inspection 100 times.

As described above, by using the resin sheet sealed product leak inspection apparatus 200 according to the second embodiment of the present invention, it is possible to carry out the leak inspection of resin sheet sealed products many times.

### Third Embodiment

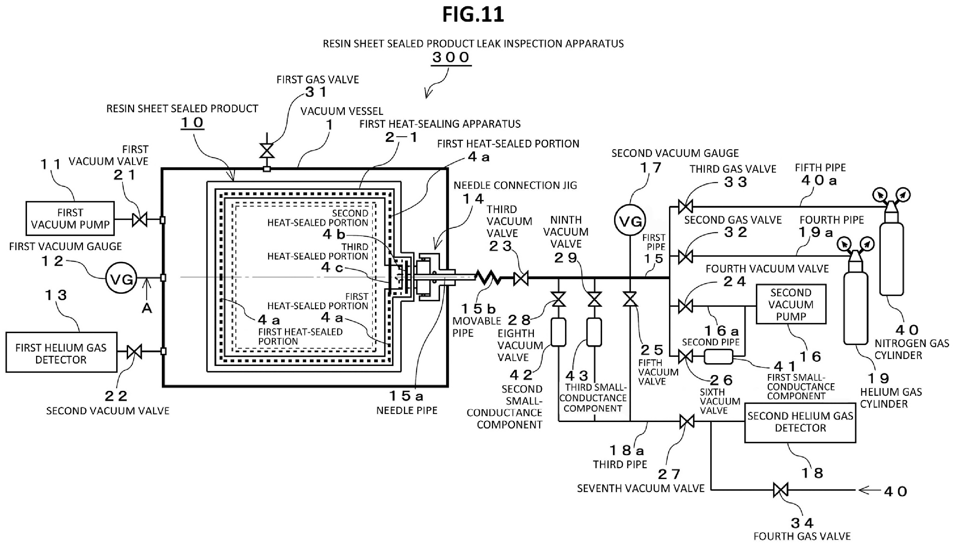

FIG. 11 is an explanatory view showing a configuration of main parts of a resin sheet sealed product leak inspection apparatus 300 according to a third embodiment of the present invention. This resin sheet sealed product leak inspection apparatus 300 is further improved with respect to the second leak inspection, compared to the resin sheet sealed product leak inspection apparatus 200 according to the second embodiment.

Specifically, in order to determine the helium concentration at the time of completion of heat-sealing of the resin sheet opening 4a1 after evacuation, a second small-conductance component 42 having a very small conductance value of 2 × 10⁻¹⁰ m³/s is connected as an evacuation flow path from the first pipe 15 to the second helium gas detector 18, in parallel with the fifth vacuum valve 25 (third pipe 18a) via an eighth vacuum valve 28. Furthermore, in helium detection by the second helium gas detector 18 from 15 seconds after the start of evacuation, a third small-conductance 43 having a small conductance value of 2 × 10⁻⁶ m³/s is connected via a ninth vacuum valve 29 in parallel with the fifth vacuum valve 25 (third pipe 18a) in order to reduce residual helium in the second helium gas detector 18, so that the measurement is performed at a low leak rate.

Using the resin sheet sealed product leak inspection apparatus 300 improved in this manner, the same leak inspection as in the process according to the first embodiment was carried out. Here, from 2 seconds to 15 seconds after the start of evacuation, evacuation was carried out by the second vacuum pump 16 and the second helium gas detector 18 via the eighth vacuum valve 28 and the second small-conductance component 42. Then, from 15 seconds to 39 seconds after the start, evacuation was carried out by the second vacuum pump 16 and the second helium gas detector 18 via the ninth vacuum valve 29 and the third small-conductance component 43. Then, from 39 seconds after the start, evacuation was carried out only by the second helium gas detector 18 via the fifth vacuum valve 25.

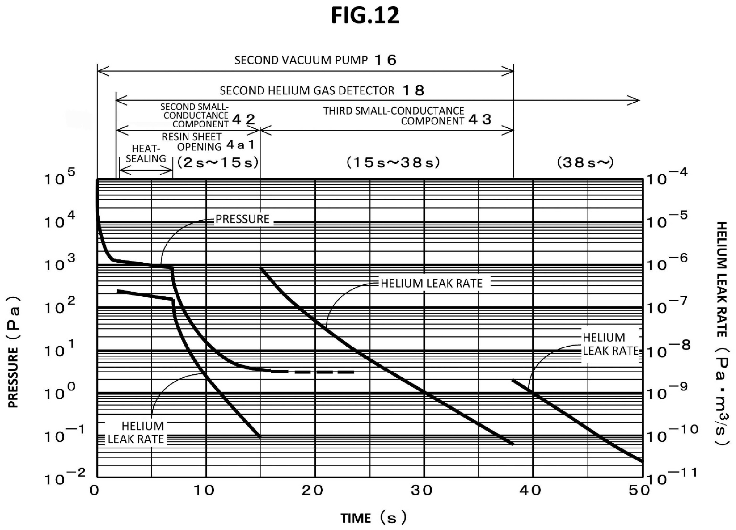

FIG. 12 is a graph showing the results of changes over time in the pressure in the gap space 5 during heat-sealing of the resin sheet opening 4a1 and in the leak rate of helium leaking from the third heat-sealed portion 4c toward the first pipe 15.

From 2 seconds to 7 seconds after the start of evacuation, the pressure at the second vacuum gauge 17 decreased gradually: a pressure of 1300 Pa at 2 seconds after the start, a pressure of 1000 Pa at 5 seconds after the start, and a pressure of 850 Pa at 7 seconds after the start. The average value of the pressure from 5 seconds to 7 seconds after the start was 930 Pa. This was taken as the pressure at the second vacuum gauge 17 immediately before heat sealing. The pressure immediately before heat-sealing of the opening heat-sealed portion of the resin sheets 4 (resin sheet opening 4a1) was estimated to be 1080 Pa.

On the other hand, from 2 seconds to 7 seconds after the start of evacuation, the leak rate of helium detected by the second helium gas detector 18 decreased gradually: a leak rate of 2.44 × 10⁻⁷ Pa·m³/s at 2 seconds after the start, a leak rate of 1.88 × 10⁻⁷ Pa·m³/s at 5 seconds after the start, and a leak rate of 1.60 × 10⁻⁷ Pa·m³/s at 7 seconds after the start. The average value of the leak rate from 5 seconds to 7 seconds after the start was 1.74 × 10⁻⁷ Pa·m³/s. Since the conductance of the second small-conductance component 42 connected to the second helium gas detector 18 is 2 × 10⁻¹⁰ m³/s, the helium partial pressure at the position of the second vacuum gauge 17 was estimated to be 869 Pa, and the helium concentration was calculated to be 94%.

Since the sealing pressure of the resin sheet is 1080 Pa and the helium concentration thereof can be estimated to be 94%, the threshold of the helium leak rate for the second leak inspection is calculated to be 5.1 × 10⁻¹⁰ Pa·m³/s. In this manner, the resin sheet sealed product leak inspection apparatus 300 according to the third embodiment can carry out highly reliable inspection since the threshold of the leak rate for each inspection can be specified.

The helium leak rate from 15 seconds to 38 seconds after the start in FIG. 12 changed over time from 1 × 10⁻⁶ Pa·m³/s to 6 × 10⁻¹¹ Pa·m³/s. This is because helium gas was introduced into the second helium gas detector 18 through the third small-conductance component 43 having a small conductance value of 2 × 10⁻⁶ m³/s, and it can be seen that the countermeasure against residual helium is effective.

Next, after 38 seconds when helium gas was introduced only into the second helium gas detector 18, the helium leak rate reached 1 × 10⁻⁹ Pa·m³/s at 40 seconds and reached 1 × 10⁻¹⁰ Pa·m³/s at 46 seconds. The helium leak rate measured in this second leak inspection dropped to or below the threshold of 5.1 × 10⁻¹⁰ Pa·m³/s at approximately 42 seconds. This time is approximately 10 seconds longer than that in the second embodiment because helium gas was introduced into the second helium gas detector 18 via the second small-conductance component 43 in the evacuation after 15 seconds from the start.

On the other hand, when leak inspections were repeatedly carried out through the process according to the third embodiment with the residual helium reduction process using nitrogen gas carried out twice after each inspection, the second helium gas detector 18 remained stable even after 200 leak inspections.

As described above, by using the resin sheet sealed product leak inspection apparatus 300 according to the third embodiment, it is possible to carry out precise leak inspections of the resin sheet sealed product 10 many times.

### Fourth Embodiment

When the leak threshold of the tracer gas in the first leak inspection is in the order of 10⁻⁸ Pa·m³/s or less, it is necessary to reduce gas permeation of a resin-made pipe connection jig 14 for connecting "the gap space 5 formed between the resin sheets 4, 4 and the internal product 3" and "a metal pipe (first pipe 15) for supplying tracer gas". This is because an easily heat-sealable resin is used for the pipe connection jig 14, but such a resin has high gas permeability.

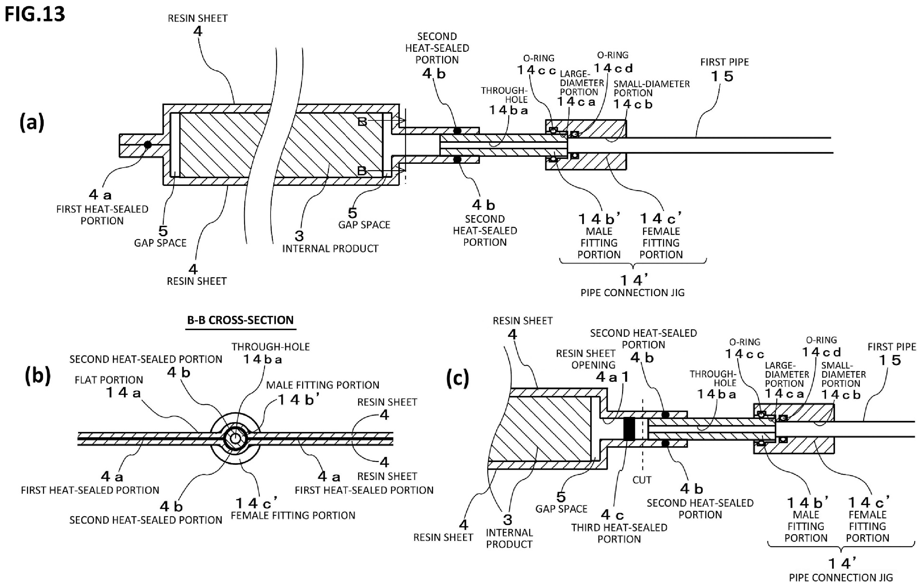

FIG. 13 is an explanatory view showing a configuration of main parts of a pipe connection jig 14' of a resin sheet sealed product leak inspection apparatus according to a fourth embodiment of the present invention. In this pipe connection jig 14', a male fitting portion 14b', which serves as a portion for introduction of tracer gas and evacuation for the gap space 5, has a thin pipe shape (small hollow cylindrical shape), and the gas permeation amount is suppressed by reducing the gas permeation area. Specifically, as shown in FIG. 13(a), in the male fitting portion 14b', the flat portion 14a included in the needle connection jig 14 is eliminated, and the male fitting portion 14b' is formed into a thin pipe shape by extending the axial length and reducing the outer diameter as compared to the male fitting portion 14b. On the other hand, in a female fitting portion 14c', the two-step cylindrical shape of the above needle connection jig 14 is changed to a single-step cylindrical shape having the smaller outer diameter thereof.

In addition, the male fitting portion 14b' is made of a high-hardness resin (easily heat-sealable resin) that is identical to or compatible with the resin sheets 4. The female fitting portion 14c' is made of metal.

As shown in FIG. 13(b), it can be seen that both the male fitting portion 14b' and the female fitting portion 14c' are downsized and the gas permeation areas thereof are reduced.

As shown in FIG. 13(c), sealing of the opening 4a1 of the resin sheets 4 is carried out by heat-sealing the inner peripheral surfaces of the resin sheets 4 together. Therefore, in the second leak inspection, the leak rate of the tracer gas leaking from the third heat-sealed portion 4c toward the first pipe 15 is detected by the second helium gas detector 18.

Note that although the first pipe 15 is directly connected to the female fitting portion 14c', it may be connected to the female fitting portion 14c' using the needle pipe 15a and the movable pipe 15b.

Using the thin pipe-shaped pipe connection jig 14', the same leak inspection as in the process according to the first embodiment was carried out. Although the leak threshold for the first leak inspection was a minute leak rate of 1 × 10⁻⁸ Pa·m³/s, the first leak inspection was successfully carried out without any problem in 30 seconds.

Next, the second leak inspection was executed using the resin sheet sealed product leak inspection apparatus 300. Here, from 4 seconds to 30 seconds after the start of evacuation, evacuation was performed by the second vacuum pump 16 and the second helium gas detector 18 via the eighth vacuum valve 28 and the second small-conductance component 42. Then, from 30 seconds to 62 seconds after the start, evacuation was performed by the second vacuum pump 16 and the second helium gas detector 18 via the ninth vacuum valve 29 and the third small-conductance component 43. Then, from 62 seconds after the start, evacuation was performed only by the second helium gas detector 18 via the fifth vacuum valve 25.

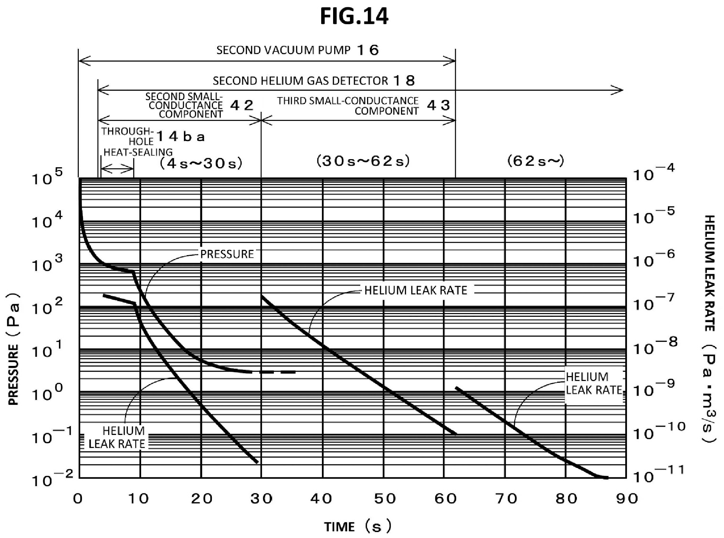

FIG. 14 is a graph showing the results of changes over time in the pressure in the gap space 5 during heat-sealing of the resin sheet opening 4a1, and in the leak rate of helium leaking from a fourth heat-sealed portion 4d toward the first pipe 15. From 4 seconds to 9 seconds after the start of evacuation, the pressure at the second vacuum gauge 17 decreased gradually: a pressure of 950 Pa at 4 seconds after the start, a pressure of 870 Pa at 7 seconds after the start, and a pressure of 630 Pa at 9 seconds after the start. The average value of the pressure from 7 seconds to 9 seconds after the start was 680 Pa. This was taken as the pressure at the second vacuum gauge 17 immediately before heat-sealing. Further, the pressure immediately before heat-sealing of the resin sheet opening 4a1 was estimated to be 1020 Pa.

On the other hand, from 4 seconds to 9 seconds after the start of evacuation, the helium leak rate detected by the second helium gas detector 18 gradually decreased: a leak rate of 1.82 × 10⁻⁷ Pa·m³/s at 4 seconds after the start, a leak rate of 1.40 × 10⁻⁷ Pa·m³/s at 7 seconds after the start, and a pressure of 1.21 × 10⁻⁷ Pa·m³/s at 9 seconds after the start. The average value of the leak rate from 7 seconds to 9 seconds after the start was 1.30 × 10⁻⁷ Pa·m³/s. Since the conductance of the second small-conductance component 42 connected to the second helium gas detector 18 is 2 × 10⁻¹⁰ m³/s, the helium partial pressure at the position of the second vacuum gauge 17 was estimated to be 650 Pa, and the helium concentration was calculated to be 95%.

Since the sealing pressure of the resin sheets is 1020 Pa and the helium concentration thereof can be estimated to be 95%, the threshold of the helium leak rate for the second leak inspection is calculated to be 5.8 × 10⁻¹¹ Pa·m³/s.

The leak rate of helium from 30 seconds to 62 seconds after the start in FIG. 14 changed over time from 1.7 × 10⁻⁷ Pa·m³/s to 1 × 10⁻¹⁰ Pa·m³/s. This is because helium gas was introduced into the second helium gas detector 18 through the third small-conductance component 43 having a small conductance value of 2 × 10⁻⁶ m³/s.

Next, after 62 seconds when helium gas was introduced only into the second helium gas detector 18, the helium leak rate reached 1 × 10⁻¹⁰ Pa·m³/s at 73 seconds and reached 1 × 10⁻¹¹ Pa·m³/s at 86 seconds. The helium leak rate measured in this second leak inspection dropped to or below the threshold of 5.8 × 10⁻¹¹ Pa·m³/s at approximately 76 seconds. This time is approximately 35 seconds longer than that in the third embodiment because the conductance of the thin pipe-shaped pipe connection jig 14' is small. Note that since the duration of the first leak inspection was approximately 30 seconds, the leak inspection time of the resin sheet sealed product leak inspection apparatus 300 using the thin pipe-shaped pipe connection jig 14' according to the fourth embodiment was approximately 106 seconds (= 30 seconds + 76 seconds).

As described above, by using the resin sheet sealed product leak inspection apparatus 300 equipped with the thin pipe-shaped pipe connection jig 14' according to the fourth embodiment of the present invention, it is possible to carry out precise leak inspection of the resin sheet sealed product 10 many times.

### Fifth Embodiment

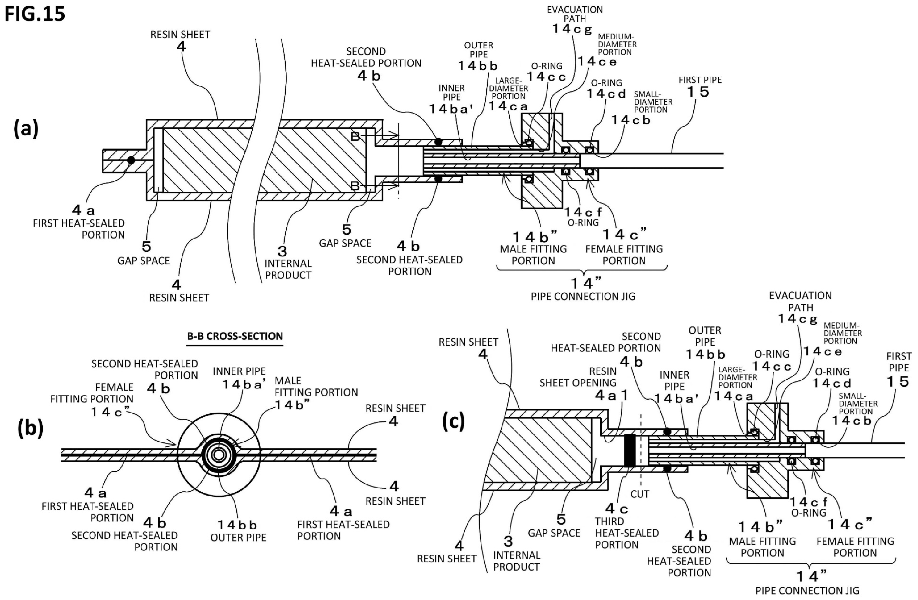

FIG. 15 is an explanatory view showing a configuration of main parts of a pipe connection jig 14" of a resin sheet sealed product leak inspection apparatus according to a fifth embodiment of the present invention. In this pipe connection jig 14", a male fitting portion 14b', which serves as a tracer gas introduction/evacuation portion for the gap space 5, has a double pipe structure, and while tracer gas is supplied to an inner pipe 14ba', the gas permeation amount of tracer gas into the vacuum vessel 1 is suppressed by evacuating a space between an outer pipe 14bb and the inner pipe 14ba'. Specifically, as shown in FIG. 15(a), in the male fitting portion 14b", the flat portion 14a included in the needle connection jig 14 is eliminated, the axial length is extended compared to the male fitting portion 14b, and a double pipe structure constituted by the inner pipe 14ba' and the outer pipe 14bb is formed. On the other hand, in a female fitting portion 14c", a medium-diameter portion 14ce having a diameter larger than the outer diameter of the inner pipe 14ba' and smaller than the inner diameter of the outer pipe 14bb is provided, and an O-ring 14cf that maintains airtightness of the inner pipe 14ba' is provided. Furthermore, an evacuation path 14cg for collecting the tracer gas permeating from the inner pipe 14ba' is provided in the medium-diameter portion 14ce.

In addition, the male fitting portion 14b" is made of a high-hardness resin (easily heat-sealable resin) that is identical to or compatible with the resin sheets 4. The female fitting portion 14c" is made of metal.

As shown in FIG. 15(b), it can be seen that the male fitting portion 14b" has a double pipe structure constituted by the inner pipe 14ba' and the outer pipe 14bb.

As shown in FIG. 15(c), sealing of the opening 4a1 of the resin sheets 4 is performed by heat-sealing the inner peripheral surfaces of the resin sheets 4 together. Therefore, in the second leak inspection, the leak rate of the tracer gas leaking from the third heat-sealed portion 4c toward the first pipe 15 is detected by the second helium gas detector 18.

Note that although the first pipe 15 is directly connected to the female fitting portion 14c", the first pipe 15 may be connected to the female fitting portion 14c' using the needle pipe 15a and the movable pipe 15b.

The embodiments of the present invention have been described above with reference to the drawings. Embodiments of the present invention are not limited to the above, and various modifications and changes can be made without departing from the technical features of the present invention. For example, as the tracer gas, other gases (for example, hydrogen, argon, or air) can be used instead of helium. In addition, as the tracer gas detector, a quadrupole mass spectrometer or a discharge emission gas analyzer can also be used instead of a helium leak detector, which is a helium gas detector.

In addition, the shape of the heat-sealed portion is not limited to the projecting polygonal shape described above, and may be any closed curve "whose start point and end point coincide" and that has a "protruding portion" capable of sealing the internal product 3 with the pair of upper and lower resin sheets 4, 4 and sandwiching the flat portion 14a. In addition, the outer shape of the heat-sealing apparatus (heat sealer) for forming the heat-sealed portion is not limited to the shape in the above-described embodiments, as long as it can heat-seal the inner peripheral surfaces of the resin sheets 4, 4 together, or the inner peripheral surface of each resin sheet 4 and the outer peripheral surface of the flat portion 14a in a desired shape.

Further, the first heat-sealed portion 4a, the second heat-sealed portions 4b, and the third heat-sealed portion 4c may be formed by a single heat-sealing apparatus.

### List of Reference Numerals

- 1: Vacuum Vessel
- 2-1: First Heat-sealing Apparatus
- 2-2: Second Heat-Sealing Apparatus
- 3: Internal Product
- 4: Resin Sheet
- 4: Resin Sheet
- 4a: First Heat-Sealed Portion
- 4a1: Resin Sheet Opening
- 4b: Second Heat-Sealed Portion
- 4c: Third Heat-Sealed Portion
- 4f: Flange Portion
- 4f1: Rectangular Frame Portion
- 4f2: Protruding Portion
- 5: Gap Space
- 6: Needle Introduction Space (Pipe Introduction Space)
- 10: Resin Sheet Sealed Product
- 11: First Vacuum Pump
- 12: First Vacuum Gauge
- 13: First Helium Gas Detector
- 14: Needle Connection Jig (Pipe Connection Jig)
- 14a: Flat Portion
- 14aa: Through-Hole
- 14b: Male Fitting Portion
- 14b': Male Fitting Portion
- 14b": Male Fitting Portion
- 14ba: Through-Hole
- 14ba': Inner Pipe
- 14bb: Outer Pipe
- 14c: Female Fitting Portion
- 14c': Female Fitting Portion
- 14c": Female Fitting Portion
- 14ca: Large-Diameter Portion
- 14cb: Small-Diameter Portion
- 14cc: O-ring
- 14cd: O-ring
- 15: First Pipe
- 15a: Needle Pipe (Pipe)
- 15b: Movable Pipe
- 16: Second Vacuum Pump
- 16a: Second Pipe
- 17: Second Vacuum Gauge
- 18: Second Helium Gas Detector
- 18a: Third Pipe
- 19: Helium Gas Cylinder
- 19a: Fourth Pipe
- 21: First Vacuum Pipe
- 22: Second Vacuum Pipe
- 23: Third Vacuum Pipe
- 24: Fourth Vacuum Pipe
- 25: Fifth Vacuum Pipe
- 26: Sixth Vacuum Pipe
- 27: Seventh Vacuum Pipe
- 31: First Gas Valve
- 32: Second Gas Valve
- 33: Third Gas Valve
- 34: Fourth Gas Valve
- 40: Nitrogen Gas Cylinder
- 40a: Fifth Pipe
- 41: First Small-Conductance Component
- 42: Second Small-Conductance Component
- 43: Third Small-Conductance Component
- 100: Resin Sheet Sealed Product Leak Inspection Apparatus
- 200: Resin Sheet Sealed Product Leak Inspection Apparatus
- 300: Resin Sheet Sealed Product Leak Inspection Apparatus

## Claims

1. A resin sheet sealed product leak inspection method in which a resin sheet sealed product (10) having an internal product (3) hermetically sealed therein in a vacuum state by heat-sealing a pair of upper and lower resin sheets (4, 4) is placed within a vacuum vessel (1) maintained at a predetermined degree of vacuum, and a leak inspection is carried out using a tracer gas, the method comprising:
sandwiching a pipe connection jig (14) configured for evacuation or tracer gas introduction between portions of the resin sheets (4, 4) when covering the internal product (3) with the resin sheets (4, 4);
forming heat-sealed portions (4a, 4b) "so as to form a protruding portion (b2-b1-b1-b2) containing the internal product (3) inside and partially protruding outward";
introducing the tracer gas into a gap space (5) formed between the resin sheets (4, 4) and the internal product (3) and the protruding portion (b2-b1-b1-b2) from a narrow resin sheet opening (4a1) formed in the protruding portion (b2-b1-b1-b2), and carrying out a first leak inspection to detect the tracer gas leaking from the heat-sealed portions (4a, 4b) into the external vacuum vessel (1);
thereafter evacuating the gap space (5) to a pressure "at which a sufficient amount of tracer gas remains below atmospheric pressure to enable detection of a leak rate"; and
subsequently forming a heat-sealed portion (4c) hermetically sealing the resin sheet opening (4a1), and carrying out a second leak inspection to detect the tracer gas leaking from the heat-sealed portion (4c) to a downstream side of the pipe connection jig (14).

2. The resin sheet sealed product leak inspection method according to claim 1,
wherein the first leak inspection is continued until completion of the second leak inspection, thereby detecting the tracer gas leaking into the external vacuum vessel (1) from "the heat-sealed portion (4c) related to the resin sheet opening (4a1)" in addition to from the heat-sealed portions (4a, 4b).

3. The resin sheet sealed product leak inspection method according to claim 1,
wherein the resin sheets (4, 4) are heat-sealed such that the protruding portion (b2-b1-b1-b2) traverses the pipe connection jig (14), and
a portion (14a) of the pipe connection jig (14) sandwiched between the resin sheets (4, 4) is formed into a flat portion (14a).

4. The resin sheet sealed product leak inspection method according to claim 1,
wherein the pipe connection jig (14) allows a pipe (15a) to move forward and backward therein while maintaining airtightness.

5. The resin sheet sealed product leak inspection method according to claim 1,
wherein the resin sheets (4) respectively have recessed portions (4r) into which the internal product (3) fits formed in central portions thereof, and flange portions (4f, 4f) of the recessed portions (4r) are formed into a projecting shape in which rectangular frame portions (4f1) and protruding portions (4f2) are combined.

6. The resin sheet sealed product leak inspection method according to claim 1,
wherein, when the gap space (5) is evacuated to a predetermined pressure and the resin sheet opening (4a1) is to be heat-sealed, heat-sealing is carried out after the gap space (5) has pressure variation smaller than pressure variation at the start of the evacuation.

7. The resin sheet sealed product leak inspection method according to claim 6,
wherein, when the second leak inspection is to be carried out, the flow rate of the tracer gas introduced into a tracer gas detector (18) configured to measure the leak rate of the tracer gas is set to be smaller than the flow rate of the tracer gas introduced into a vacuum pump (16) configured to evacuate "the heat-sealed portion (4c) related to the resin sheet opening (4a1)".

8. The resin sheet sealed product leak inspection method according to claim 7,
wherein, after the leak rate of the tracer gas leaking from "the heat-sealed portion (4c) related to the resin sheet opening (4a1)" to the downstream side of the pipe connection jig (14) is measured, an evacuation system and a leak rate measurement system are purged with an inert gas other than the tracer gas.

9. A resin sheet sealed product leak inspection apparatus comprising:
a vacuum vessel (1) configured to accommodate, under a predetermined vacuum environment, an internal product (3) covered by resin sheets (4, 4) and a pipe connection jig (14) sandwiched between portions of the resin sheets (4, 4);
a first vacuum pump (11) configured to evacuate an internal space of the vacuum vessel (1) formed around the internal product (3);
a pair of first heat-sealing apparatuses (2-1) configured to heat-seal overlapping portions (4f, 4f) of the resin sheets (4, 4) along an outer periphery thereof in a projecting shape to form projecting heat-sealed portions (4a, 4b);
a second vacuum pump (16) configured to evacuate a gap space (5) formed between the resin sheets (4, 4) and the internal product (3);
a tracer gas source (19) configured to introduce a tracer gas into the gap space (5);
a first pipe (15) that communicates with the gap space (5), the second vacuum pump (16), and the tracer gas source (19);
a first tracer gas detector (13) configured to detect a leak rate of the tracer gas leaking from the projecting heat-sealed portions (4a, 4b) into the external vacuum vessel (1);
a pair of second heat-sealing apparatuses (2-2) configured to heat-seal a narrow resin sheet opening (4a1) between two recessed corner portions (b2, b2) of the projecting heat-sealed portions (4a, 4b) to form a linear heat-sealed portion (4c); and
a second tracer gas detector (18) configured to detect the leak rate of the tracer gas leaking from the linear heat-sealed portion (4c) to the downstream side of the first pipe (15) via the pipe connection jig (14).

10. The resin sheet sealed product leak inspection apparatus according to claim 9,
wherein the pipe connection jig (14) includes a molded component having through portions (14aa, 14ba) that pass therethrough, in which "a flat portion (14a) and a cylindrical portion (14b) are integrally molded from a resin compatible with the resin sheets (4, 4)", and
the flat portion (14a) is sandwiched between portions (4f2, 4f2) of the overlapping portions (4f, 4f) of the resin sheets (4, 4) that project outward from the resin sheet opening (4a1).

11. The resin sheet sealed product leak inspection apparatus according to claim 10,
wherein a pipe (15a) connected to the first pipe (15) via a flexible movable pipe (15b) is disposed in the through portions (14aa, 14ba) so as to be movable back and forth.

12. The resin sheet sealed product leak inspection apparatus according to claim 11,
wherein a through-hole (14aa) through which the pipe (15a) is movable back and forth is formed in the flat portion (14a).

13. The resin sheet sealed product leak inspection apparatus according to claim 11,
wherein the pipe connection jig (14) separately includes a metal female cylindrical portion (14c) including a large-diameter portion (14ca) into which the cylindrical portion (14b) fits and a small-diameter portion (14cb) through which the pipe (15a) passes, and
sealing members (14cc, 14cd) configured to maintain airtightness are provided between the cylindrical portion (14b) and the large-diameter portion (14ca) and between the pipe (15a) and the small-diameter portion (14cb), respectively.

14. The resin sheet sealed product leak inspection apparatus according to claim 9,
wherein flange portions (4f) of the resin sheets (4) have a projecting shape in which rectangular frame portions (4f1) and protruding portions (4f2) are combined, and recessed portions (4r) into which the internal product (3) fits are formed inside the flange portions (4f).

15. The resin sheet sealed product leak inspection apparatus according to claim 9,
wherein, in parallel with a second pipe (16a) coupling the first pipe (15) and the second vacuum pump (16), one or more small-conductance components (41) having a smaller conductance value than the second pipe (16a) are connected.

16. The resin sheet sealed product leak inspection apparatus according to claim 9,
wherein, in parallel with a third pipe (18a) coupling the first pipe (15) and the second tracer gas detector (18), one or more small-conductance components (42, 43) having a smaller conductance value than the third pipe (18a) are connected.

17. The resin sheet sealed product leak inspection apparatus according to claim 9,
wherein an inert gas other than the tracer gas is suppliable to the second vacuum pump (16) and the second tracer gas detector (18) in parallel.
